(19) Europäisches Patentamt / European Patent Office / Office européen des brevets

(11) **EP 4 431 202 B1**

(12) **EUROPEAN PATENT SPECIFICATION**

(45) Date of publication and mention
of the grant of the patent:
**22.04.2026 Bulletin 2026/17**

(21) Application number: **22906926.5**

(22) Date of filing: **18.08.2022**

(51) International Patent Classification (IPC):
*B21D 22/26* (2006.01)     *B21D 5/01* (2006.01)
*B23P 9/04* (2006.01)     *C21D 7/06* (2006.01)
*B21D 31/06* (2006.01)     *B21D 53/88* (2006.01)
*C21D 7/04* (2006.01)

(52) Cooperative Patent Classification (CPC):
**B23P 9/04; B21D 31/06; B21D 53/88; C21D 7/04;
C21D 7/06; Y02P 10/20**

(86) International application number:
**PCT/JP2022/031204**

(87) International publication number:
**WO 2023/112390 (22.06.2023 Gazette 2023/25)**

## Description

Field

The present invention relates to a fatigue crack growth suppressing method for a bent portion of a metal sheet that suppresses the growth of the fatigue crack in the bent portion obtained by bending the metal sheet, and an automotive part that has a bent portion obtained by bending a metal sheet, the bent portion being suppressed in growth of a fatigue crack.

Background

A bent portion of a metal sheet is obtained by bending a metal sheet by press forming, and application of a local strong compressive stress to the bent portion leads to initiation of a crack in a surface on the inside of the bend. It is known that when a cyclic load is applied to a part having the bent portion as described above, the crack grows and the fatigue life of the part decreases. Therefore, several technologies have been proposed to improve the fatigue life of the part having the bent portion obtained by bending the metal sheet.

Patent Literature 1 and Patent Literature 2 each describe a technology to suppress generation of a crack on the inside of local bending constituting a root of a burring portion, during coining of a metal sheet. Specifically, in this technology, bending to a radius of curvature (including an infinite radius of curvature, i.e., a straight line) different from that of a final shape in the first step and bending to the radius of curvature of the final shape in the second step introduce tensile stress on an inside surface of the bend, suppressing generation of a crack in the inside surface of the bend. Patent Literature 3 describes a technology to apply surface hardening treatment by shot peening to a surface of a metal sheet to which bending stress is to be applied to enhance yield stress so that fatigue strength is improved after the shot peening. Patent Literature 4 describes a technology to repair a fatigue crack initiated in a bent plate portion of a steel material. Specifically, in this technology, at least one of both sides across the fatigue crack on a surface of the steel material is peened in parallel with the fatigue crack to close the opening of the fatigue crack, and then, peening is further applied from immediately above the fatigue crack.

Citation List

Patent Literature

Patent Literature 1: JP 2018-51608 A

Patent Literature 2: JP 2018-51609 A

Patent Literature 3: JP 2000-225567 A

Patent Literature 4: JP 4441641 B1

Non Patent Literature

Non Patent Literature 1: J. C. Newman Jr. and I. S. Raju: Eng. Fract. Mech., Vol. 15, No. 1-2 (1981), p. 185 Further related art may be found in JP 2019 178382 A, which describes a manufacturing method of a steel product formed by bending.

Summary

Technical Problem

In the technology described in Patent Literature 1, the two steps of bending requires preparation of two types of molds, and there is a problem of increased manufacturing cost. The technology described in Patent Literature 2 has a problem that the technology is applicable only to a burring portion. The technology described in Patent Literature 3 using the shot peening requires a closed container for processing to prevent scattering of a projection material. The technology described in Patent Literature 4 is a method of peening a flat plate or a weld toe with an air hammer peening device. However, when each of the above technologies is applied to the part having the bent portion obtained by bending the metal sheet, there are the following problems (a) to (c).

(a) Impact is entirely applied to the inside of the bend of the bent portion that is a portion having a possibility to initiate the crack, reducing the productivity.
(b) An impact load of an impact pin used for the peening deforms the whole of the part (the bent portion and the periphery thereof).
(c) When the impact pin has a tip radius larger than the radius of curvature of the bent portion, a bending angle of the bent portion is enlarged.

The present invention has been made to solve the above problems, and an object of the present invention is to provide a fatigue crack growth suppressing method for a bent portion of a metal sheet, the method being applicable to a bent portion after bending without increasing the manufacturing cost of the bent portion of the metal sheet, the method being configured to suppress the growth of a fatigue crack in the bent portion without decreasing the productivity or changing the bending angle of the whole of a part or the bent portion. Another object of the present invention is to provide an automotive part that has a bent portion obtained by bending a metal sheet, the bent portion being suppressed in growth of the fatigue crack. Solution to Problem

The present invention is defined by the independent claims. An advantageous embodiment is described in the dependent claim. A fatigue crack growth suppressing method for a bent portion of a metal sheet according to the present invention suppresses growth of a fatigue crack in the bent portion obtained by bending the metal sheet, and includes generating a compressive residual stress by applying plastic strain at least within a range from a bending start point to a bending end point on an inside of a bend of the bent portion, at an interval of less than a sheet thickness of the metal sheet in a valley line direction of the bent portion, in a direction orthogonal to the valley line direction.

The compressive residual stress may be generated by forming an indentation band including a series of indentations, on the inside of the bend of the bent portion through needle peening using an impact pin, and a radius of curvature of a tip portion of the impact pin in a cross-section orthogonal to the valley line direction may be equal to or less than a radius of curvature of the bent portion.

An automotive part according to the present invention includes: a bent portion obtained by bending a metal sheet, the bent portion being suppressed in growth of a fatigue crack; and an indentation band including a series of indentations obtained by needle peening using an impact pin in a direction orthogonal to a valley line direction, the indentation band being positioned at least within a range from a bending start point to a bending end point on an inside of a bend of the bent portion, and the indentations being provided at an interval of less than a sheet thickness of the metal sheet along the valley line direction of the bent portion.

Advantageous Effects of Invention

According to the present invention, the growth of the crack initiated in the bent portion obtained by bending the metal sheet is suppressed and the fatigue life of the automotive part having the bent portion is effectively improved.

Brief Description of Drawings

FIG. 1 illustrates diagrams of a fatigue crack growth suppressing method for a bent portion of a metal sheet according to a first embodiment of the present invention and an automotive part according to a second embodiment of the present invention ((a) a plan view of the bent portion as viewed forward, (b) a cross-sectional view, and (c) an enlarged view of the bent portion).
FIG. 2 illustrates diagrams of the growth of a fatigue crack in a bent portion and the concept of suppressing the growth of the fatigue crack, as the background of the present invention ((a) crack growth in a normal (general) metal sheet and (b) crack growth in the bent portion).
FIG. 3 illustrates diagrams of a stress distribution in the bent portion in the background of the present invention ((a) immediately after bending and (b) after springback).
FIG. 4 illustrates a graph showing a result of a study on a stress intensity factor at a crack tip of a crack initiated in a bent portion in the background of the present invention ((a) a schematic diagram of a crack surface and (b) values of the stress intensity factor in a depth direction and a horizontal direction in the crack surface).
FIG. 5 illustrates diagrams of a fatigue test piece used for a fatigue test in an example of the present invention ((a) the front view and (b) a cross-sectional view).
FIG. 6 is a diagram illustrating a fatigue test method in the example of the present invention.

Description of Embodiments

<Background of present invention>

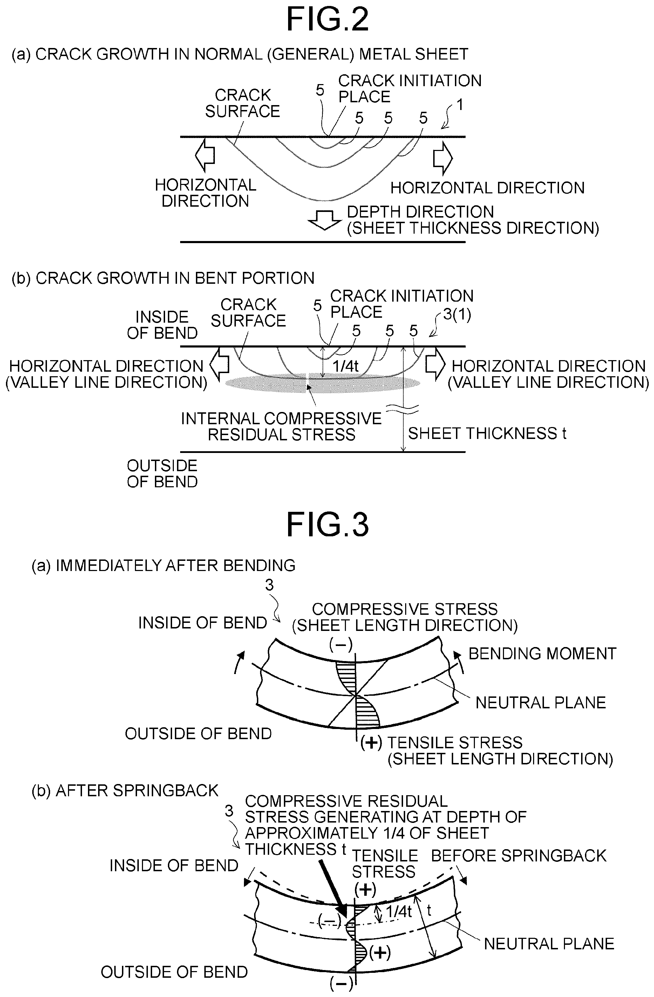

Generally, as illustrated in FIG. 2(a), a fatigue crack initiated in a surface of a metal sheet grows while a semi-elliptical crack surface expands in both of a horizontal direction (direction along a surface of a metal sheet 1) and a depth direction (sheet thickness direction of the metal sheet 1), from a place where a crack 5 is initiated. Then, the crack surface reaches a back surface side of the metal sheet 1, leading to fatigue fracture.

Therefore, as illustrated in FIG. 2(b), an inventor observed in detail a growth process of the fatigue crack initiated on the inside of the bend of a bent portion 3 obtained by bending the metal sheet 1. As a result, it was found that the crack 5 initiated on the inside of the bend of the bent portion 3 grew in both of the depth direction (the sheet thickness direction of the metal sheet 1) and the horizontal direction (valley line direction on the inside of the bend) in the bent portion 3, immediately after initiation. Furthermore, as illustrated in FIG. 2(b), it was found that the growth of the crack 5 in the sheet thickness direction stopped when the depth reached approximately 1/4 of the sheet thickness t, and then the crack 5 grew only in the horizontal direction.

In study on the cause of this findings, the inventor focused on a stress distribution in the bent portion 3 as illustrated in FIG. 3. As illustrated in FIG. 3(a), immediately after the metal sheet 1 is bent, a region on the inside of the bend relative to a neutral plane is subjected to a compressive stress and a region on the outside of the bend relative to the neutral plane is subjected to tensile stress, in the bent portion 3. However, after unloading and springback of a bending moment in the bent portion 3 obtained by bending, a surface layer portion on the inside of the bend, the compressive stress is reversed to the tensile stress, as illustrated in FIG. 3(b). In addition, the compressive stress remains at a position of approximately 1/4 of the sheet thickness t from the surface on the inside of the bend of the bent portion 3.

Therefore, it was found that the reason why the growth of the fatigue crack initiated on the inside of the bend of the bent portion 3 in the depth direction (sheet thickness direction) stops at a depth of approximately 1/4 of the sheet thickness from the surface on the inside of the bend is due to a compressive residual stress remaining inside the bent portion 3 even after the springback.

However, when the compressive residual stress remaining in the bent portion 3 is released for some reason (i.e., redistribution of residual stress due to yielding of a material caused by a single excessive load, or relaxation of the residual stress by heat or with time, or the like), the growth of the crack in the depth direction is resumed. At this time, the crack grows while the semi-elliptical crack surface expands in both the horizontal direction and the depth direction, and therefore, the growth of the crack in the horizontal direction to some extent may remarkably increase a crack growth rate in the depth direction, and fatigue fracture may tend to occur or brittle fracture may tend to occur. Therefore, from the viewpoint of the reliability of the part, it is desirable to take measures against such a crack.

Therefore, the inventor has intensively studied a method of suppressing the growth of the crack in the depth direction even in a state where the compressive residual stress inside the bent portion of the metal sheet is released. As a result, it was found that even in a state where the compressive residual stress remaining inside the bent portion 3 is released by generating the compressive residual stress through application of plastic strain at predetermined intervals in the valley line direction (horizontal direction) of the bent portion 3, the growth of the crack in the depth direction can be suppressed to prevent fatigue fracture or suppress brittle fracture.

The present invention has been made on the basis of the above findings, and specifically has the following configuration.

[First Embodiment]

<Fatigue crack growth suppressing method for bent portion of metal sheet>

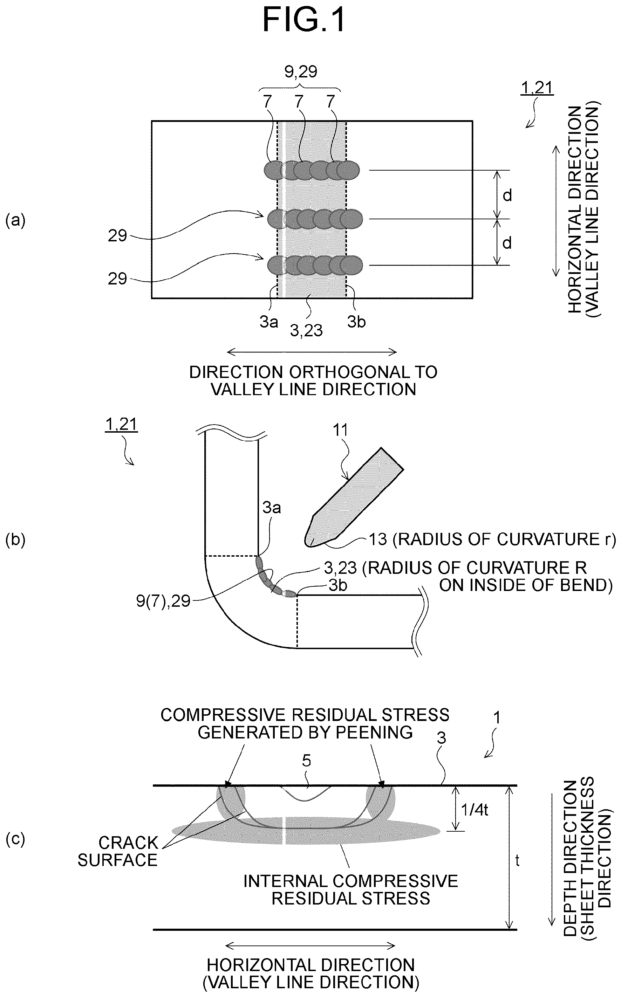

A fatigue crack growth suppressing method for a bent portion of a metal sheet according to a first embodiment of the present invention suppresses the growth of a fatigue crack initiated in the bent portion 3 obtained by bending the metal sheet 1. As illustrated in FIG. 1, in this method, plastic strain is applied at least within a range from a bending start point 3a to a bending end point 3b on the inside of the bend of the bent portion 3, at an interval of less than a sheet thickness t of the metal sheet 1 in a valley line direction on the inside of the bend in the bent portion 3, in a direction orthogonal to the valley line direction, generating the compressive residual stress.

In addition, as illustrated in FIG. 1(b), the compressive residual stress is generated by forming an indentation band 9 (see FIG. 1(a)) that includes a series of indentations 7, within the range from the bending start point 3a to the bending end point 3b on the inside of the bend of the bent portion 3 by needle peening using an impact pin 11. At this time, an interval d between the indentation bands 9 in the valley line direction is less than the sheet thickness t of the metal sheet 1. The impact pin 11 includes a tip portion 13 whose cross-section orthogonal to the valley line direction has a radius of curvature r equal to or less than a radius of curvature R on the inside of the bend of the bent portion 3.

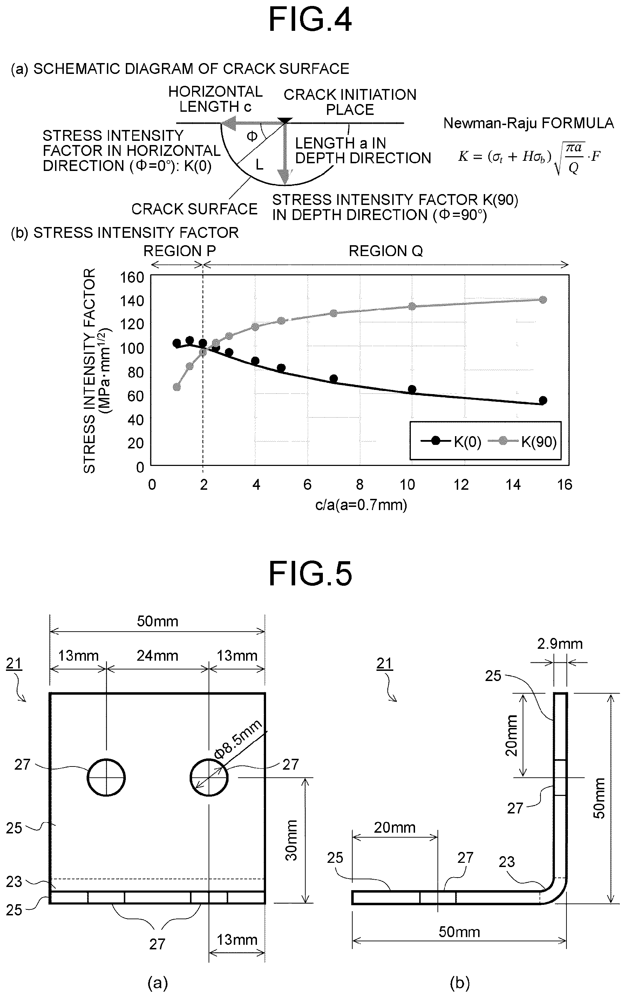

The reason why the growth of the crack initiated on the inside of the bend of the bent portion 3 in the valley line direction is suppressed by the present method will be described, on the basis of a result of the study on a stress intensity factor at a crack tip of the crack initiated on the inside of the bend of the bent portion 3 of the metal sheet 1 illustrated in FIG. 4.

FIG. 4(a) is a diagram schematically illustrating a shape of the crack surface. It is assumed that the crack initiated on the surface on the inside of the bend of the bent portion 3 of the metal sheet 1 grows while the crack surface expands into the semi-elliptical shape in both the depth direction and the horizontal direction as illustrated in FIG. 4(a).

FIG. 4(b) illustrates results of calculation of the stress intensity factor K at the crack tip of the crack growing in the horizontal direction (valley line direction on the inside of the bend) and the depth direction (sheet thickness direction) by using a Newman-Raju formula (see Non Patent Literature 1) represented by the following Formula (1).

$$K = (\sigma_t + H(a, c, t, \phi)\sigma_b)\sqrt{\frac{\pi a}{Q(a, c)}} \cdot F(a, c, b, t, \phi) \qquad \cdots (1)$$

In the above Formula (1), $\sigma_t$ is tensile stress, $\sigma_b$ is bending stress, a is a length of the crack surface in the depth direction (sheet thickness direction), c is a horizontal length of the crack surface (distance from a crack initiation place to the crack tip in the horizontal direction), b is a sheet width of the metal sheet 1, t is the sheet thickness of the bent portion 3 (metal sheet 1), and $\phi$ is an angle formed by a straight line L connecting the crack initiation place and the crack tip and the surface of the bent portion 3. H (a, c, t, and $\phi$), Q (a, and c), and F (a, c, b, t, and $\phi$) are functions given by the variables (see Non Patent Literature 1).

In FIG. 4(b), K(0) is a stress intensity factor that develops in the horizontal direction (valley line direction on the inside of the bend), that is, in a direction of $\phi = 0°$. K(90) is a stress intensity factor that develops in the depth direction (sheet thickness direction), that is, in a direction of $\phi = 90°$. In the calculation of K(0) and K(90), the sheet thickness t (= 2.8 mm), a sheet width of 50 mm, and a bending load of 100 MPa were set, and a crack depth a was set to 0.7 mm, which is 1/4 of the sheet thickness t (= 2.8 mm). FIG. 4(b) illustrates relationships between a crack surface ratio c/a, which is an index representing the shape of the semi-elliptical crack surface, and K(0) and K(90). In the above Formula (1), the influence of the compressive residual stress at a depth of approximately 1/4 of the sheet thickness t from the surface on the inside of the bend is not considered. In addition, the magnitude of the stress intensity factor calculated without considering the influence of the compressive residual stress represents the magnitude of the crack growth rate.

The graph illustrated in FIG. 4(b) shows that in a region where the crack surface ratio c/a is c/a ≤ 2 (hereinafter, this region is referred to as a "region P"), that is, when the crack surface has an almost semicircular shape, the stress intensity factor K(0) in the horizontal direction is substantially constant having a high value and a driving force of crack extension (growth) in the horizontal direction is large. Meanwhile, it can be seen that a stress intensity factor K(90) in the depth direction is smaller than the stress intensity factor K(0) in the horizontal direction (K(90) < K(0)) and the driving force of the crack extension (growth) in the depth direction is small.

On the other hand, the graph shows that in a region where the crack surface ratio c/a is c/a > 2 (hereinafter, this region is referred to as a "region Q"), as the shape of the crack surface expands in the horizontal direction into the semi-elliptical shape (the value of c/a increases), the stress intensity factor K(0) decreases, and the driving force of crack extension in the horizontal direction also decreases. Meanwhile, it can be seen that the stress intensity factor K(90) in the depth direction is larger than the stress intensity factor K(0) in the horizontal direction (K(90) > K(0)) and the driving force of the crack extension (growth) in the depth direction increases.

In other words, the magnitude of the driving force of the crack extension in the horizontal direction changes from the crack surface ratio c/a = 2. Assuming that the growth of the crack in the depth direction stops at a position of approximately 1/4 of the sheet thickness t, the length a of the crack surface in the depth direction is expressed as a ≈ t/4. Therefore, when the crack surface ratio c/a = 2, a relationship of 2c ≈ t is established. Furthermore, assuming that the crack grows symmetrically in the horizontal direction, 2c is the width of the crack surface in the horizontal direction. Therefore, when the crack surface ratio c/a = 2, the width (= 2c) of the crack surface in the horizontal direction is substantially the same as the sheet thickness t of the metal sheet 1.

On the basis of the above result of the study, a concept of suppressing the growth of the crack initiated on the inside of the bend of the bent portion 3 will be described.

As described above, when the compressive residual stress remains inside the bent portion 3, the growth of the crack in the depth direction stops at the position of approximately 1/4 of the sheet thickness t from the surface on the inside of the bend, and the crack mainly grows only in the horizontal direction. Therefore, the shape of the crack surface extends in the horizontal direction into the semi-elliptical shape (crack surface ratio c/a > 2, the region Q in FIG. 4(b)). Then, as the shape of the crack surface expands in the horizontal direction (as the crack surface ratio c/a increases), the stress intensity factor K(0) in the horizontal direction decreases, and the crack growth rate in the horizontal direction gradually decreases. Meanwhile, although the crack does not grow in the depth direction due to the compressive residual stress remaining inside, when the residual stress is ignored, the stress intensity factor K(90) in the depth direction is in a state (K(90) > K(0)) where the stress intensity factor K(90) is larger than the stress intensity factor K(0) in the horizontal direction. In such a state, when the compressive residual stress inside the bent portion 3 is released for some reason as described above, the growth of the crack in the depth direction is resumed. Then, the stress intensity factor K(90) in the depth direction governs a fracture phenomenon such as fracture toughness, the crack growth rate in the depth direction remarkably increases, and brittle fracture is likely to occur.

Therefore, in order to suppress or prevent the growth of the crack in the depth direction in a state where the residual stress is relaxed as described above, the growth of the crack in the horizontal direction is preferably stopped before the shape of the crack surface is extended in the horizontal direction into the semi-elliptical shape, that is, in a state where the stress intensity factor K(90) in the depth direction is smaller than the stress intensity factor K(0) in the horizontal direction (K(90) < K(0), the region P in FIG. 4(b)).

In other words, as illustrated in FIG. 4(b), in order to stop the growth of the crack in the horizontal direction in the region P where the growth of the crack satisfies c/a < 2, that is, a crack width 2c less than the sheet thickness t (2c < t) is satisfied, the indentation bands 9 are formed in the valley line direction of the bent portion 3 at an interval less than the sheet thickness t to introduce the compressive residual stress. Therefore, assuming that the crack 5 grows symmetrically in the horizontal direction, when the crack 5 grows to reach the first indentation band 9, the crack width 2c of less than the sheet thickness t is satisfied, and the value of the stress intensity factor K(90) in the depth direction does not exceed the value of the stress intensity factor K(0) in the horizontal direction when c/a = 2. Therefore, it is possible to suppress the growth of the crack in the depth direction.

As described above, when the compressive residual stress inside the bent portion 3 is released, it is possible to suppress fatigue fracture due to rapid growth of the crack 5 in the depth direction. Furthermore, preventing the stress intensity factor K(90) in the depth direction at an end of the crack surface from increasing relative to the stress intensity factor K(0) in the horizontal direction, it is also possible to suppress the brittle fracture caused by the crack initiated in the bent portion 3.

The above description has been made of the compressive residual stress inside the bent portion 3 being released, but even when the compressive residual stress remains unreleased, it is possible to suppress the growth of the crack in the valley line direction, suppressing the fatigue fracture to improve the fatigue life.

In the first embodiment, as described above, the compressive residual stress of the bent portion 3 is generated by forming the indentation band 9, which has a series of indentations 7, on the inside of the bend of the bent portion 3 by the needle peening using the impact pin and applying plastic strain. The impact pin 11 preferably includes the tip portion 13 whose cross-section orthogonal to the valley line direction has the radius of curvature r equal to or smaller than the radius of curvature R of the in the of the bent portion 3.

This is because if the radius of curvature r of the tip portion 13 of the impact pin 11 is larger than the radius of curvature R of the bent portion 3, the tip portion 13 of the impact pin 11 cannot apply direct impact to the bent portion 3 and compressive residual stress cannot be appropriately generated in the bent portion 3.

In part of the inside of the bend of the bent portion 3, buckling deformation occurs during bending, and the radius of curvature is locally extremely reduced, in some cases. However, the radius of curvature R of the bent portion 3 preferably has a macroscopic radius of curvature, except for the radius of curvature of the bent portion 3 globally changed due to buckling.

Furthermore, against the problems (b) and (c) in the technology described in Patent Literature 4 described above, impact is applied by the impact pin 11 having the radius of curvature r smaller than the radius of curvature on the inside of the bend of the bent portion 3. This configuration makes it possible to suppress deformation of the metal sheet 1 and a change in the bending angle of the bent portion 3, and at the same time, to appropriately introduce the compressive residual stress into the bent portion 3.

In addition, the range in which the indentation band 9 is formed on the inside of the bend of the bent portion 3 in the direction orthogonal to the valley line direction may be whole or part of the range from the bending start point to the bending end point on the inside of the bend. Each of the bending start point and the bending end point means an end of curvature on the inside of the bend of the bent portion 3.

At this time, when a crack or wrinkles are apparent or a crack initiation position according to a condition or the like of stress applied to the metal sheet is apparent, in the width direction of the bent portion 3, it is not necessary to perform treatment over the entire range of the bent portion 3 on the inside of the bend in the valley line direction. The indentation bands 9 are preferably formed only around the crack initiation position to apply plastic strain so that the compressive residual stress may be generated.

The lower limit of the interval d between the indentation bands 9 in the valley line direction on the inside of the bend of the bent portion 3 is not particularly defined, but is preferably large from the viewpoint of productivity. When there is an allowable crack length, such as a life required for a part obtained by bending a metal sheet, an allowable crack length as a part, or a lower limit of the length of a crack that can be found in periodic inspection, the smaller of the crack length and the sheet thickness is preferably set as the lower limit.

In the present invention, simultaneous needle peening using a plurality of impact pins may be employed, and further, the needle peening can be combined with an automatic construction method using a robot arm or the like may promise improvement in productivity. Furthermore, for a part having many bent portions, such as an automotive part, application of this treatment to the entire region of the bent portions reduces productivity. Therefore, it is preferable to limit application of the treatment, only to a place where the radius of curvature of the bent portion is smaller, or a place where the fatigue fracture on the inside of the bend may occur, found in advance by a fatigue test, stress analysis, or the like.

Furthermore, the present invention generates the compressive residual stress in the bent portion to suppress the growth of the crack in the valley line direction of the bent portion. Therefore, the method of generating the compressive residual stress is not limited to the needle peening, and similar treatment such as laser peening, shot peening, or cold spray may be employed. When the shot peening is employed, masking a position other than a position where the indentations are desired to introduce so as not to cause unnecessary plastic deformation provides the equivalent effect. These methods are methods to apply impact on materials to generate plastic strain, causing the compressive residual stress. In the laser peening, plastic strain is applied by impact on the bent portion caused by using a shock wave generated upon laser irradiation, and in each of the shot peening and the cold spray, plastic strain is applied by impact on the bent portion caused by spraying a projection material.

When the bending of the metal sheet follows axial tension and compression, not by pure bending, the position in the sheet thickness direction where the compressive residual stress is introduced moves, but also in this case, the crack stops at the position of the compressive residual stress. Therefore, when the position of the compressive residual stress is not so different from the position of 1/4 of the sheet thickness t, treatment is preferably performed under the condition in which a relationship between the depth a of the compressive residual stress and the horizontal length c of the crack surface satisfies $2c > 4a$.

When a position in the depth direction where the compressive residual stress is introduced by the springback is greatly separated from the position of 1/4 of the sheet thickness, recalculation is preferably performed by the above method to determine the interval d at which the needle peening is performed on the basis of the value of $c/a$ at which $K(0)$ decreases.

As described above, in the present invention, the fatigue life of the part having the bent portion obtained by bending the metal sheet can be effectively improved. Furthermore, according to the present invention, the peening is not required for the entire surface of the inside of the bend in the bent portion, and therefore, improvement in productivity is promising, and the effect of improving the fatigue life given by the compressive residual stress or work-hardening due to local plastic strain on the inner side of the bend is also promising.

Furthermore, according to the present invention, even when no crack is originally initiated on the inside of the bend of the bent portion, microscopic irregularities such as wrinkles are smoothed, and therefore, an effect of reducing microscopic stress concentration is promising. In addition, use of the impact pin having the tip portion with a small radius of curvature makes it possible to reduce the impact load required to deform the metal sheet and form the indentation band. This configuration suppresses a reaction force for stable construction, and makes it possible not only to suppress macroscopic deformation of the whole of a part that may occur when the method described in Patent Literature 4 is applied to the part having the bent portion of the metal sheet, but also to apply the method to a production line using a robot arm or the like.

In addition, in the present invention, it is possible to eliminate the possibility that the impact pin does not make contact with the surface on the inside of the bend of the bent portion and impact is not sufficiently applied. Furthermore, when the present invention is applied to the manufacture of the automotive part, an additional press mold for performing bending as in the method described in Patent Literature 1 is not required, and the present invention is also applicable to the burring portion as in a method described in Patent Literature 2. Furthermore, a scattering prevention container required for shot peening as in the method described in Patent Literature 3 is not required.

[Second Embodiment]

<Automotive part>

As illustrated in FIG. 1, an automotive part according to a second embodiment of the present invention includes the bent portion 3 obtained by bending the metal sheet 1 to suppress the growth of the fatigue crack in the bent portion 3. The automotive part includes the indentation bands 9, each of which includes a series of the indentations 7 obtained by the needle peening, at least within a range from the bending start point 3a to the bending end point 3b on the inside of the bend of the bent portion 3, at an interval of less than the sheet thickness of the metal sheet 1 in the valley line direction of the bent portion 3, in a direction orthogonal to the valley line direction.

In the automotive part according to the second embodiment as well, similarly to the fatigue crack growth suppressing method for the bent portion of the metal sheet according to the first embodiment of the present invention described above, the indentation bands 9 are formed by the needle peening at an interval less than the sheet thickness in the valley line direction of the bent portion 3 to apply the compressive residual stress, suppressing the growth of the crack 5 in the valley line direction before the crack width reaches the size of the sheet thickness. This configuration makes it possible to suppress fatigue fracture due to rapid growth of the crack in the sheet thickness direction, when the compressive residual stress remaining inside the bent portion 3 is released. Furthermore, the brittle fracture caused by the crack 5 initiated in the bent portion 3 can be suppressed.

Furthermore, in the automotive part according to the second embodiment, even when the compressive residual stress inside the bent portion 3 remains unreleased, the growth of the crack 5 in the valley line direction can be suppressed, and therefore, the fatigue fracture can be prevented to improve the fatigue life.

Plastic strain is applied to the bent portion 3 in the automotive part according to the second embodiment by the needle peening. In the automotive part according to the present invention, the plastic strain applied to the bent portion by the needle peening is employed, but the plastic strain may be applied to the bent portion by treatment such as laser peening, shot peening, or cold spray.

[Example]

An experiment that was conducted for confirming the functions and effects of the present invention will be described below.

In the present example, a fatigue test was performed on a fatigue test piece 21 illustrated in FIG. 5 as a test object, for evaluation of fatigue strength.

A hot rolled steel sheet having a sheet thickness of 2.9 mm and a yield strength grade of 850 MPa was cut into 200 mm × 50 mm as a sample, the sample was subjected to bending by using a press brake (bending machine) including a bending tool (punch) having a tip portion with a radius of curvature of 3 mm, and the fatigue test piece 21 was prepared. The fatigue test piece 21 includes a bent portion 23 that has a radius of curvature R = 2 mm on the inside of the bend and piece portions 25a and 25b that extend from both end sides of the bent portion 23, and the piece portions 25a and 25b are provided with hole portions 27a and 27b each having a diameter $\phi$ of 8.5 mm, respectively.

Next, as illustrated in FIGS. 1(a) and 1(b), the bent portion 23 of the fatigue test piece 21 was subjected to needle peening to form indentation bands 29 at a predetermined interval d in the valley line direction on the inside of the bend. The radius of curvature r of the tip portion of the impact pin 11 used for the needle peening was set to r = 0.2 mm smaller than the radius of curvature R = 2 mm in a cross-section of the bent portion 23 taken in the valley line direction.

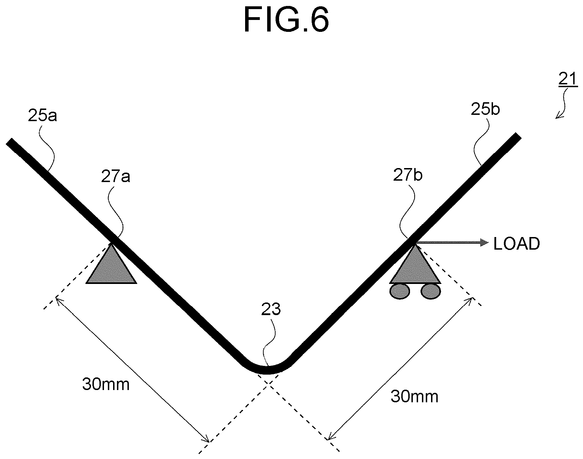

Subsequently, the fatigue test was performed on the fatigue test piece 21 obtained by needle peening of the bent portion 23, under a boundary condition illustrated in FIG. 6. In the fatigue test, as illustrated in FIG. 6, the hole portion 27a (FIG. 6) of one piece portion 25a of the fatigue test piece 21 was fixed as a fixing point, and a cyclic load (load of 2.3 kN and repetition frequency of 10 Hz) was applied with the hole portion 27b of the other piece portion 25b as a load input point.

Then, a penetrant inspection test for the bent portion 23 was performed every 100,000 load input cycles to measure the growth of the crack initiated in the bent portion 23. When a crack of 2.8 mm or more is initiated, the test was finished, and the fatigue test was finished. In addition, 2,000,000 cyclic load cycles was defined as a fatigue limit, the fatigue test piece 21 that has reached the fatigue limit was determined to be acceptable, and the fatigue test was finished.

In the present example, a fatigue test was performed on a fatigue test piece 21 having a changed interval d between the indentation bands 29, and 2-mm and 2.8-mm fatigue test pieces 21 each having an interval d less than the sheet thickness of the metal sheet 1 within the range of the present invention were defined as invention example 1 and invention example 2. In addition, for comparison, 3-mm and 4-mm fatigue test pieces 21 having an interval d between the indentation bands 29 equal to or more than the sheet thickness of the metal sheet 1 out of the range of the present invention were used as comparative example 1 and comparative example 2, and a fatigue test piece 21 in which the bent portion 23 was not subjected to the peening and the indentation band 29 was not formed was used as comparative example 3. Table 1 shows the intervals d between the indentation bands 29 formed in the fatigue test pieces 21 and results of the fatigue tests.

**Table 1**

|  | Interval d (mm) | Cycles for finish of fatigue test | Acceptable/unacceptable |
|---|---|---|---|
| Invention example 1 | 2 | 2,000,000 cycles | Acceptable |
| Invention example 2 | 2.8 | 2,000,000 cycles | Acceptable |
| Comparative example 1 | 3 | 1,500,000 cycles | Unacceptable |
| Comparative example 2 | 4 | 500,000 cycles | Unacceptable |
| Comparative example 3 | No peening | 200,000 cycles | Unacceptable |

Each of invention example 1 and invention example 2 reached the fatigue limit without a crack of 2.8 mm or more after 2,000,000 cycles, and was determined to be acceptable. On the other hand, a crack of 2.8 mm or more was initiated in comparative example 1 and comparative example 2 each having an interval d between the indentation bands 29 out of the range of the present invention, after 1,500,000 cycles and 500,000 cycles, respectively, and the crack was initiated in comparative example 3 without the indentation band 29, after 200,000 cycles, and any of the comparative examples was determined to be unacceptable.

As described above, according to the present invention, it was shown that the growth of the fatigue crack on the inside of the bend of the bent portion obtained by bending the metal sheet can be suppressed and the fatigue life can be improved.

Industrial Applicability

According to the present invention, it is possible to provide the fatigue crack growth suppressing method for a bent portion of a metal sheet, the method being applicable to a bent portion after bending without increasing the manufacturing cost of the bent portion of the metal sheet, the method being configured to suppress the growth of a fatigue crack in the bent portion without decreasing the productivity or changing the bending angle of the whole of a part or the bent portion. In addition, according to the present invention, it is possible to provide the automotive part that has a bent portion obtained by bending a metal sheet, the bent portion being suppressed in growth of the fatigue crack.

Reference Signs List

| | |
|---|---|
| 1 | METAL SHEET |
| 3 | BENT PORTION |
| 3a | BENDING START POINT |
| 3b | BENDING END POINT |
| 5 | CRACK |
| 7 | INDENTATION |
| 9 | INDENTATION BAND |
| 11 | IMPACT PIN |
| 13 | TIP PORTION |
| 21 | FATIGUE TEST PIECE |
| 23 | BENT PORTION |
| 25a, 25b | PIECE PORTION |
| 27a, 27b | HOLE PORTION |
| 29 | INDENTATION BAND |

**Claims**

1. A fatigue crack growth suppressing method for a bent portion (3) of a metal sheet (1) for suppressing growth of a fatigue crack in the bent portion obtained by bending the metal sheet, comprising
   generating a compressive residual stress by applying plastic strain at least within a range from a bending start point to a bending end point on an inside of a bend of the bent portion, at an interval of less than a sheet thickness of the metal sheet in a valley line direction of the bent portion, in a direction orthogonal to the valley line direction.

2. The fatigue crack growth suppressing method for a bent portion of a metal sheet according to claim 1, wherein

the compressive residual stress is generated by forming an indentation band (9, 29) including a series of indentations (7), on the inside of the bend of the bent portion through needle peening using an impact pin (11), and a radius of curvature of a tip portion of the impact pin in a cross-section orthogonal to the valley line direction is equal to or less than a radius of curvature of the bent portion.

3. An automotive part comprising:

a bent portion (3) obtained by bending a metal sheet (1), the bent portion being suppressed in growth of a fatigue crack by using the method of claim 2; and
an indentation band (9, 29) including a series of indentations (7) obtained by needle peening using an impact pin (11) in a direction orthogonal to a valley line direction, the indentation band being positioned at least within a range from a bending start point to a bending end point on an inside of a bend of the bent portion, and the indentations being provided at an interval of less than a sheet thickness of the metal sheet along the valley line direction of the bent portion.

## Patentansprüche

1. Ermüdungsrisswachstumsunterrückungsverfahren für einen gebogenen Abschnitt (3) eines Metallblattes (1) zur Unterdrückung des Wachstums eines Ermüdungsrisses in dem gebogenen Abschnitt, erhalten durch Biegen des Metallblattes, das Folgendes aufweist:
Erzeugen einer Druckrestspannung durch Aufbringen einer plastischen Dehnung zumindest innerhalb eines Bereichs von einem Biegestartpunkt bis zu einem Biegeendpunkt auf der Innenseite einer Biegung des gebogenen Abschnitts in einem Intervall von weniger als einer Blattdicke des Metallblatts in einer Tallinienrichtung des gebogenen Abschnitts in einer Richtung orthogonal zu der Tallinienrichtung.

2. Ermüdungsrisswachstumsunterdrückungsverfahren für einen gebogenen Abschnitt eines Metallblattes nach Anspruch 1, wobei

die Druckrestspannung durch Ausbilden eines Vertiefungsbandes (9, 29), das eine Reihe von Vertiefungen (7) aufweist, auf der Innenseite der Biegung des gebogenen Abschnitts durch Nadelhämmern unter Verwendung eines Schlagbolzens (11) erzeugt wird, und
ein Krümmungsradius eines Spitzenabschnitts des Schlagbolzens in einem Querschnitt orthogonal zur Tallinienrichtung gleich oder kleiner ist als ein Krümmungsradius des gebogenen Abschnitts.

3. Kraftfahrzeugteil, das Folgendes aufweist:

einen gebogenen Abschnitt (3), der durch Biegen eines Metallblatts (1) erhalten wird, wobei das Wachstum eines Ermüdungsrisses im gebogenen Abschnitt durch Anwendung des Verfahrens nach Anspruch 2 unterdrückt wird; und
ein Vertiefungsband (9, 29), das eine Reihe von Vertiefungen (7) aufweist, die durch Nadelhämmern unter Verwendung eines Schlagbolzens (11) in einer Richtung orthogonal zu einer Tallinienrichtung erhalten werden, wobei das Vertiefungsband zumindest innerhalb eines Bereichs von einem Biegestartpunkt zu einem Biegeendpunkt auf einer Innenseite einer Biegung des gebogenen Abschnitts positioniert ist, und die Vertiefungen in einem Intervall von weniger als einer Blattdicke des Metallblatts entlang der Tallinienrichtung des gebogenen Abschnitts vorgesehen sind.

## Revendications

1. Procédé de suppression de la propagation d'une fissure de fatigue dans une partie courbée (3) d'une plaque métallique (1) pour supprimer la propagation d'une fissure de fatigue dans la partie courbée obtenue par pliage de la plaque métallique, comprenant les étapes consistant à :
générer une contrainte résiduelle de compression en appliquant une déformation plastique au moins dans une plage allant d'un point de début de pliage à un point de fin de pliage sur le côté intérieur du pli de la partie courbée, à un intervalle inférieur à l'épaisseur de la plaque métallique dans une direction de la ligne de vallée de la partie courbée, dans une direction orthogonale à la direction de la ligne de vallée.

2. Procédé de suppression de la propagation d'une fissure de fatigue pour une partie courbée d'une plaque métallique selon la revendication 1, dans lequel

la contrainte résiduelle de compression est générée en formant une bande d'indentations (9, 29) incluant une série d'indentations (7), sur le côté intérieur du pli de la partie courbée par grenaillage à aiguilles en utilisant un percuteur d'impact (11), et
un rayon de courbure d'une partie de pointe du percuteur d'impact dans une section orthogonale à la direction de la ligne de vallée est égal à ou inférieur à un rayon de courbure de la partie courbée.

3. Composant d'automobile comprenant :

une partie courbée (3) obtenue par pliage d'une tôle métallique (1), la propagation d'une fissure de fatigue dans la partie courbée étant supprimée en utilisant le procédé de la revendication 2 ; et
une bande d'indentations (9, 29) incluant une série d'indentations (7) obtenue par grenaillage à aiguilles en utilisant un percuteur d'impact (11) dans une direction orthogonale à une direction de la ligne de vallée,
la bande d'indentations étant positionnée au moins dans une plage allant d'un point de début de pliage à un point de fin de pliage sur le côté intérieur du pli de la partie courbée, et
les indentations étant disposées à un intervalle inférieur à l'épaisseur de la tôle métallique le long de la direction de la ligne de vallée de la partie courbée.

# FIG.1

(a)

DIRECTION ORTHOGONAL TO
VALLEY LINE DIRECTION

(b)

(c)

HORIZONTAL DIRECTION
(VALLEY LINE DIRECTION)

# FIG.2

(a) CRACK GROWTH IN NORMAL (GENERAL) METAL SHEET

CRACK INITIATION PLACE

CRACK SURFACE

5

5 5 5

1

HORIZONTAL DIRECTION

HORIZONTAL DIRECTION

DEPTH DIRECTION
(SHEET THICKNESS DIRECTION)

(b) CRACK GROWTH IN BENT PORTION

CRACK INITIATION PLACE

INSIDE OF BEND

CRACK SURFACE

5

5 5 5

3(1)

HORIZONTAL DIRECTION
(VALLEY LINE DIRECTION)

1/4t

HORIZONTAL DIRECTION
(VALLEY LINE DIRECTION)

INTERNAL COMPRESSIVE
RESIDUAL STRESS

SHEET THICKNESS t

OUTSIDE
OF BEND

# FIG.3

(a) IMMEDIATELY AFTER BENDING

3

INSIDE OF BEND

COMPRESSIVE STRESS
(SHEET LENGTH DIRECTION)
(−)

BENDING MOMENT

NEUTRAL PLANE

OUTSIDE OF BEND

(+) TENSILE STRESS
(SHEET LENGTH DIRECTION)

(b) AFTER SPRINGBACK

3

COMPRESSIVE RESIDUAL
STRESS GENERATING AT DEPTH OF
APPROXIMATELY 1/4 OF SHEET
THICKNESS t

INSIDE OF BEND

TENSILE
STRESS
(+)

BEFORE SPRINGBACK

(−)

1/4t  t

NEUTRAL PLANE

(+)

OUTSIDE OF BEND

(−)

# FIG.4

(a) SCHEMATIC DIAGRAM OF CRACK SURFACE

HORIZONTAL LENGTH c    CRACK INITIATION PLACE

STRESS INTENSITY FACTOR IN HORIZONTAL DIRECTION (Φ=0°): K(0)

Φ

LENGTH a IN DEPTH DIRECTION

L

CRACK SURFACE

STRESS INTENSITY FACTOR K(90) IN DEPTH DIRECTION (Φ=90°)

Newman-Raju FORMULA

$$K = (\sigma_t + H\sigma_b)\sqrt{\frac{\pi a}{Q}} \cdot F$$

(b) STRESS INTENSITY FACTOR

REGION P    REGION Q

STRESS INTENSITY FACTOR (MPa·mm$^{1/2}$)

c/a(a=0.7mm)

● K(0)    ● K(90)

# FIG.5

(a)

(b)

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018051608 A
- JP 2018051609 A
- JP 2000225567 A
- JP 4441641 B
- JP 2019178382 A

**Non-patent literature cited in the description**

- **J. C. NEWMAN JR.** ; **I. S. RAJU**. *Eng. Fract. Mech.*, 1981, vol. 15 (1-2), 185